# EUROPEAN PATENT SPECIFICATION

(11) **EP 3 181 821 B1**
(45) Date of publication and mention of the grant of the patent: **05.08.2020**
(21) Application number: 16203379.9
(22) Date of filing: 12.12.2016
(51) Int. Cl.: F01D 5/18

(54) **TURBULATORS FOR IMPROVED COOLING OF GAS TURBINE ENGINE COMPONENTS**
TURBULATOREN ZUR VERBESSERTEN KÜHLUNG VON GASTURBINENTRIEBWERKSKOMPONENTEN
TURBULATEURS POUR AMÉLIORER LE REFROIDISSEMENT DES COMPOSANTS D'UN MOTEUR DE TURBINE À GAZ

(30) Priority: 15.12.2015 US 201514969566
(43) Date of publication of application: 21.06.2017
(73) Proprietor: United Technologies Corporation, Farmington, CT 06032 (US)
(72) Inventor: DUELM, Bradley T., Wethersfield, CT 06109 (US)
(74) Representative: Dehns

(56) References cited:
- EP-A1- 2 876 258
- EP-A1- 2 878 768
- JP-A- 2009 041 433
- US-B1- 6 729 383
- US-B1- 7 690 894

## Description

### BACKGROUND

This disclosure relates to gas turbine engines, and more particularly to thermal management of turbine components of gas turbine engines.

Gas turbines hot section components, for example, turbine vanes and blades and blade outer air seals, in the turbine section of the gas turbine engine are configured for use within particular temperature ranges. Often, the conditions in which the components are operated exceed a maximum useful temperature of the material of which the components are formed. Thus, such components often rely on cooling airflow to cool the components during operation. For example, stationary turbine vanes often have internal passages for cooling airflow to flow through, and additionally may have openings in an outer surface of the vane for cooling airflow to exit the interior of the vane structure and form a cooling film of air over the outer surface to provide the necessary thermal conditioning. Similar internal cooling passages are often included in other components, such as the aforementioned turbine blades and blade outer air seals.

Turbulators are often included in the cooling passages, affixed to one or more walls of the cooling passage to increase turbulence of the cooling airflow flowing through the cooling passage, thereby improving heat transfer characteristics of the cooling passage. The turbulators are typically "unidirectional", meaning that their turbulation capabilities are dependent on the direction of the cooling airflow. For example, one shape of turbulator often utilized is triangular in shape (see, for example, JP 2009-041433). When cooling flow is directed such that it first encounters a leg of the triangle it has a first degree of turbulation, but when the cooling airflow flows in an opposite direction and first encounters a vertex of the triangle, turbulation is greatly reduced.

An alternative form of turbulator, which is diamond-shaped, is disclosed in EP 2878768. A heat sink having pins of various cross-sectional geometries is disclosed in US 6729383 B1.

### SUMMARY

Viewed from one aspect the present invention provides a gas turbine engine component according to claim 1.

In one embodiment, a gas turbine engine component includes a body defining a cooling airflow passage thereat configured for directing a cooling airflow therethrough. A plurality of turbulators are positioned at at least one passage wall of the cooling airflow channel. Each turbulator of the plurality of turbulators includes a plurality of facets extending outwardly from a central portion. The component is characterized in that adjacent facets of the plurality of facets are arranged such that a recessed portion is disposed therebetween. Each turbulator is symmetrical about a turbulator central axis. The plurality of facets are equally spaced about the turbulator central axis.

Additionally or alternatively, in this or other embodiments the plurality of facets are in the range of 4 facets to 24 facets equally spaced about the central axis.

Additionally or alternatively, in this or other embodiments each facet of the plurality of facets is triangular in shape.

Additionally or alternatively, in this or other embodiments the plurality of facets are configured and arranged to increase a surface area of the turbulator in the path of an oncoming cooling airflow.

Additionally or alternatively, in this or other embodiments the plurality of turbulators are configured and arranged to exhibit substantially equal turbulence-inducing capabilities regardless of a flow direction of the cooling airflow.

Additionally or alternatively, in this or other embodiments the component is one of a turbine blade, turbine vane or blade outer airseal.

In a preferred form, said blade outer airseal for a gas turbine engine includes a sealing surface configured to maintain a clearance between the blade outer airseal and an adjacent turbine blade. The blade outer airseal further includes a back wall opposite the sealing surface, the back wall at least partially defining said cooling airflow passage for flowing said cooling airflow therethrough to reduce a temperature of the blade outer airseal via thermal energy exchange between the blade outer airseal and the cooling airflow. Said plurality of turbulators are disposed on the back wall of the blade outer airseal.

In another embodiment, a gas turbine engine includes a combustor and a plurality of gas turbine engine components positioned in fluid communication with the combustor. Each component includes a body defining a cooling airflow passage thereat configured for directing a cooling airflow therethrough. A plurality of turbulators are located at at least one passage wall of the cooling airflow channel, each turbulator of the plurality of turbulators including a plurality of facets extending outwardly from a central portion.

Additionally or alternatively, in this or other embodiments each turbulator is symmetrical about a turbulator central axis.

Additionally or alternatively, in this or other embodiments the plurality of facets are configured and arranged to increase a surface area of the turbulator in the path of an oncoming cooling airflow.

Additionally or alternatively, in this or other embodiments the plurality of turbulators are configured and arranged to exhibit substantially equal turbulence-inducing capabilities regardless of a flow direction of the cooling airflow.

Additionally or alternatively, in this or other embodiments the component is one of a turbine blade, turbine vane or blade outer airseal.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a schematic illustration of a gas turbine engine;
FIG. 2 is cross-sectional view of an turbine section of a gas turbine engine;
FIG. 3 is a perspective view of an embodiment of a blade outer air seal of a gas turbine engine;
FIG. 4 is a plan view of an embodiment of a multi-directional turbulator;
FIG. 5 is a plan view of another embodiment of a multi-directional turbulator; and
FIG. 6 is a plan view of yet another embodiment of a multidirectional turbulator.

### DETAILED DESCRIPTION

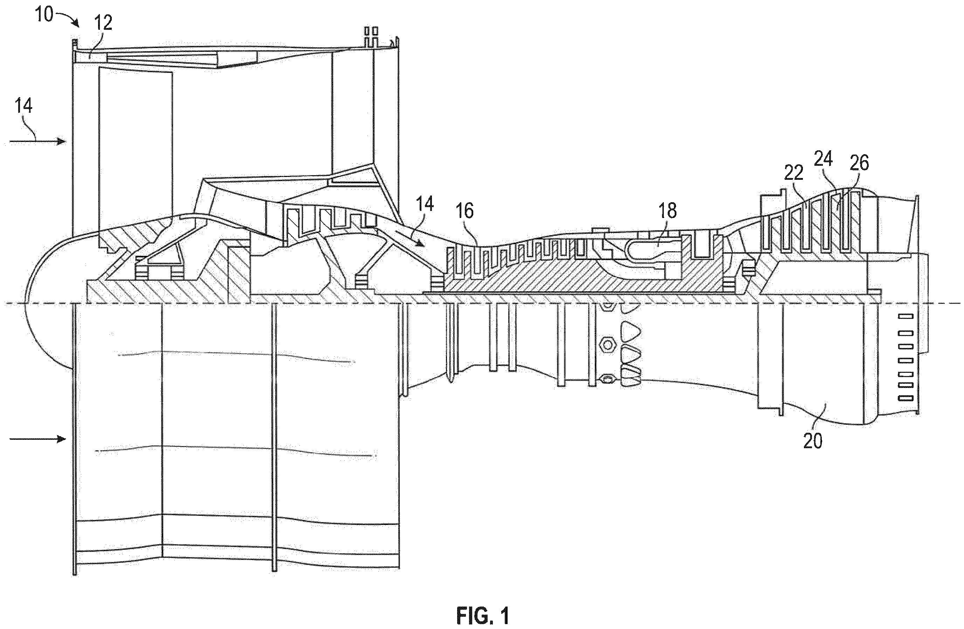

FIG. 1 is a schematic illustration of a gas turbine engine 10. The gas turbine engine generally has a fan 12 through which ambient air is propelled in the direction of arrow 14, a compressor 16 for pressurizing the air received from the fan 12 and a combustor 18 wherein the compressed air is mixed with fuel and ignited for generating combustion gases.

The gas turbine engine 10 further comprises a turbine section 20 for extracting energy from the combustion gases. Fuel is injected into the combustor 18 of the gas turbine engine 10 for mixing with the compressed air from the compressor 16 and ignition of the resultant mixture. The fan 12, compressor 16, combustor 18, and turbine 20 are typically all concentric about a common central longitudinal axis of the gas turbine engine 10.

The gas turbine engine 10 may further comprise a low pressure compressor located upstream of a high pressure compressor and a high pressure turbine located upstream of a low pressure turbine. For example, the compressor 16 may be a multi-stage compressor 16 that has a low-pressure compressor and a high-pressure compressor and the turbine 20 may be a multistage turbine 20 that has a high-pressure turbine and a low-pressure turbine. In one embodiment, the low-pressure compressor is connected to the low-pressure turbine and the high pressure compressor is connected to the high-pressure turbine.

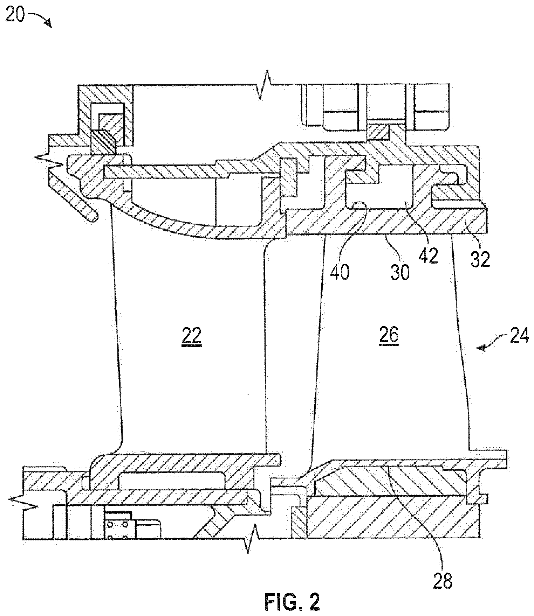

The turbine 20 includes one or more sets, or stages, of fixed turbine vanes 22 and turbine rotors 24, each turbine rotor 24 including a plurality of turbine blades 26. FIG. 2 illustrates an embodiment of a turbine 20 section of the gas turbine engine 10 in more detail. The turbine blades 26 extend from a blade platform 28 radially outwardly to a blade tip 30. The blade tip 30 interfaces with a blade outer airseal 32 to maintain minimal operational clearances and thus operational efficiency of the turbine 20. The turbine vanes 22 and the turbine blades 26 utilize internal cooling passages through which a cooling airflow is circulated to maintain the turbine blades 26 and turbine vanes 22 within a desired temperature range. Similarly, the blade outer airseal 32 utilizes a cooling channel over which cooling airflow is directed to maintain the blade outer airseal 32 at a desired temperature range, to improve the service life of the blade outer airseal 32 and to control thermal mismatch between the blade outer airseal 32 and the turbine blades 26 to maintain the desired clearances therebetween.

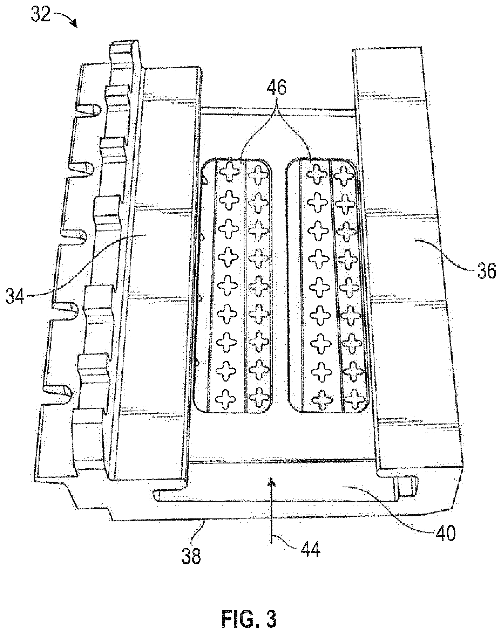

FIG. 3 illustrates an embodiment of a blade outer airseal 32. While the following description is in the context of blade outer airseal 32, it is to be appreciated that the configurations disclosed herein are readily applicable to other components, such as turbine blades 26, turbine vanes 22, and/or any other components utilizing cooling passages.

The blade outer airseal 32 includes a forward flange 34 and an aft flange 36 to secure the blade outer airseal 32 in place in the turbine 20. A sealing surface 38 extends between the forward flange 34 and aft flange 36 to define an interface with the blade tip 30. In some embodiments, the sealing surface 38 may include an abradable material to allow for contact between the sealing surface 38 and the blade tip 30 without damaging substrate material of the sealing face 38. A backside surface 40 opposite the sealing surface 38 defines a cooling passage 42 (best shown in FIG. 2) through which a cooling airflow 44 is directed to cool the blade outer airseal 32.

The cooling passage 42 includes an arrangement of turbulators 46 extending at least partially cross the cooling passage 42. The turbulators 46 induce turbulence in the cooling airflow 44 flowing through the cooling passage 42, which increases the efficiency of thermal energy exchange between the cooling airflow 44 and the blade outer airseal 32. The turbulators 46 are configured to be multi-directional, in other words having substantially equal turbulence-inducing capability regardless of a direction of the cooling airflow 44 through the cooling passage 42.

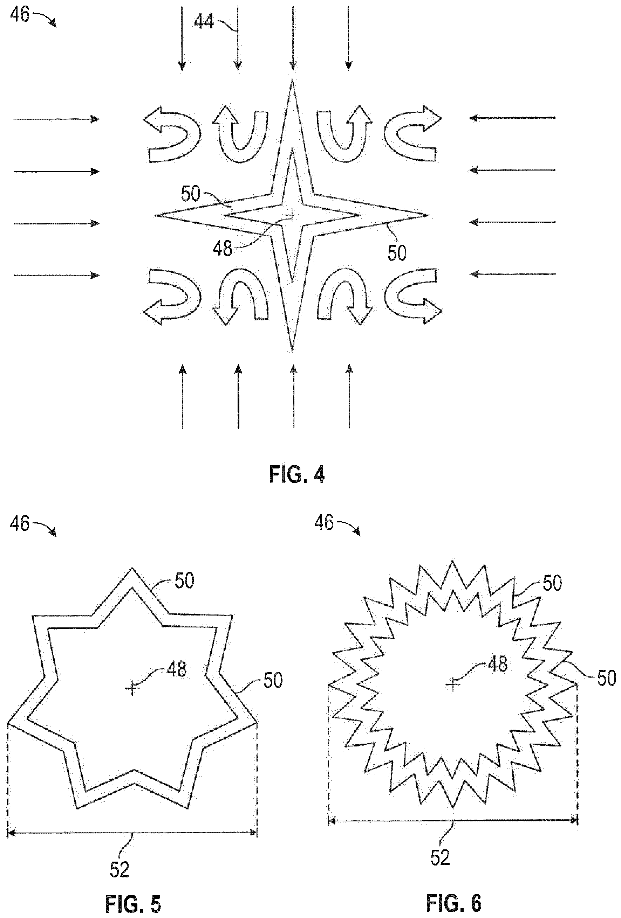

Embodiments of multi-directional turbulators 46 are illustrated in FIGS. 4 to 6. The turbulators 46 illustrated are each symmetrical about a central axis 48, resulting in the ability to provide equal heat transfer benefit regardless of the cooling airflow 44 direction. To impart the multi-directionality, the turbulators 46 include a central portion 54 located at the central axis 48, and a plurality of protrusions or facets 50 arrayed about the central axis 48 and extending radially outwardly from the central portion 54. The facets 50 may be of various sizes or shapes as long as symmetry about the central axis 48 is maintained. For example, the facets 50 may be triangular in shape, or alternatively may be of another shape, such as polygonal or elliptical.

In the embodiment of FIG. 4, the turbulator 46 includes four triangular facets 50 arrayed about the central axis 48 at about 90 degree increments. The facets 50 increase an effective size of the turbulator by increasing a surface area in the path of the cooling airflow 44 regardless of the flow direction of the cooling airflow 44, as shown in FIG. 4.

Additional embodiments are shown in FIG. 5 and FIG. 6, with FIG. 5 illustrating an embodiment of a turbulator 46 having seven triangular facets 50 equally spaced about the central axis 48, and FIG. 6 illustrating an embodiment of a turbulator 46 having 24 triangular facets 50 equally spaced about the central axis 48. While increasing a number of facets 50 increases the turbulator 46 surface area in the path of the cooling airflow 44, increasing the number of facets 50 without increasing a turbulator maximum diameter 52 requires the facets 46 to be smaller. The symmetrical multi-directional turbulators 46 illustrated and described herein reduce the impact of cooling airflow 44 direction on the heat transfer capabilities of the turbulator 46. High degrees of turbulence are experienced under all flow directions of the cooling airflow 44, thus the heat transfer between the cooling airflow 44 and the blade outer airseal 32 has increased effectiveness. Further, the turbulators 46 may be utilized not only in blade outer airseals 32, but also in turbine vanes 22 and/or turbine blades 26, or other components of the gas turbine engine that utilize cooling airflow 44 flowing through cooling passages 42 to cool the components to a desired temperature range.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A gas turbine engine component, comprising:
a body defining a cooling airflow passage (42) thereat configured for directing a cooling airflow (44) therethrough; and
a plurality of turbulators (46) disposed at at least one passage wall (38, 40) of the cooling airflow channel (42), each turbulator (46) of the plurality of turbulators (46) including a plurality of facets (50) extending outwardly from a central portion (54);
**characterized in that** each turbulator (46) is symmetrical about a turbulator central axis (48) and is formed by a wall having an outer surface and an inner surface which is spaced from the turbulator central axis (48), wherein the plurality of facets (50) are formed on the outer surface and are equally spaced about the turbulator central axis (48), and wherein adjacent facets (50) of the plurality of facets (50) are arranged such that a recessed portion is disposed therebetween.

2. The gas turbine engine component of claim 1, wherein the plurality of facets (50) are in the range of 4 facets (50) to 24 facets (50) equally spaced about the central axis (48).

3. The gas turbine engine component of any preceding claim, wherein each facet (50) of the plurality of facets (50) is triangular in shape.

4. The gas turbine engine component of any preceding claim, wherein the plurality of facets (50) are configured and arranged to increase a surface area of the turbulator (46) in the path of an oncoming cooling airflow (44).

5. The gas turbine engine of any preceding claim, wherein the plurality of turbulators (46) are configured and arranged to exhibit substantially equal turbulence-inducing capabilities regardless of a flow direction of the cooling airflow (44).

6. The gas turbine engine component of any preceding claim, wherein the component is one of a turbine blade (26), turbine vane (22) or blade outer airseal (32).

7. The gas turbine engine component of claim 6, wherein the component is a blade outer airseal (32), comprising:
a sealing surface (38) configured to maintain a clearance between the blade outer airseal (32) and an adjacent turbine blade (26);
a back wall (40) opposite the sealing surface (38), the back wall (40) at least partially defining said cooling airflow passage (42) for flowing said cooling airflow (44) therethrough to reduce a temperature of the blade outer airseal (32) via thermal energy exchange between the blade outer airseal (32) and the cooling airflow (44); and
said plurality of turbulators (46) disposed on the back wall (40) of the blade outer airseal (32).

8. A gas turbine engine (10), comprising:
a combustor (18); and
a plurality of gas turbine engine components as claimed in any of claims 1 to 6 disposed in fluid communication with the combustor (18).

## Patentansprüche

1. Gasturbinentriebwerkskomponente, umfassend:
einen Körper, der einen Kühlluftstromkanal (42) definiert, der dazu konfiguriert ist, einen Kühlluftstrom (44) durch diesen hindurchzuleiten; und
eine Vielzahl von Turbulatoren (46), die an mindestens einer Durchgangswand (38, 40) des Kühlluftstromkanals (42) angeordnet ist, wobei jeder Turbulator (46) der Vielzahl von Turbulatoren (46) eine Vielzahl von Facetten (50) beinhaltet, die sich von einem zentralen Abschnitt (54) nach außen erstreckt;
**dadurch gekennzeichnet, dass** jeder Turbulator (46) um eine zentrale Turbulatorachse (48) symmetrisch ist und durch eine Wand gebildet ist, die eine Außenfläche und eine Innenfläche aufweist, die von der zentralen Turbulatorachse (48) beabstandet ist, wobei die Vielzahl von Facetten (50) an der Außenfläche gebildet ist und gleichmäßig um die zentrale Turbulatorachse (48) beabstandet ist, und wobei benachbarte Facetten (50) der Vielzahl von Facetten (50) derart angeordnet sind, dass ein vertiefter Abschnitt dazwischen angeordnet ist.

2. Gasturbinentriebwerkskomponente nach Anspruch 1, wobei die Vielzahl von Facetten (50) im Bereich von 4 Facetten (50) bis 24 Facetten (50) liegt, die gleichmäßig um die zentrale Achse (48) beabstandet sind.

3. Gasturbinentriebwerkskomponente nach einem der vorstehenden Ansprüche, wobei jede Facette (50) der Vielzahl von Facetten (50) eine dreieckige Form aufweist.

4. Gasturbinentriebwerkskomponente nach einem der vorstehenden Ansprüche, wobei die Vielzahl von Facetten (50) dazu konfiguriert und angeordnet ist, einen Oberflächenbereich des Turbulators (46) in dem Pfad eines einströmenden Kühlluftstroms (44) zu vergrößern.

5. Gasturbinentriebwerk nach einem der vorstehenden Ansprüche, wobei die Vielzahl von Turbulatoren (46) dazu konfiguriert und angeordnet ist, unabhängig von einer Strömungsrichtung des Kühlluftstroms (44) im Wesentlichen gleiche turbulenzerzeugende Fähigkeiten aufzuweisen.

6. Gasturbinentriebwerkskomponente nach einem der vorstehenden Ansprüche, wobei die Komponente eine von einer Turbinenlaufschaufel (26), einer Turbinenschaufel (22) oder einer äußeren Laufschaufelluftdichtung (32) ist.

7. Gasturbinentriebwerkskomponente nach Anspruch 6, wobei die Komponente eine äußere Laufschaufelluftdichtung (32) ist, umfassend:
eine Dichtungsfläche (38), die dazu konfiguriert ist, einen Abstand zwischen der äußeren Laufschaufelluftdichtung (32) und einer benachbarten Turbinenlaufschaufel (26) aufrechtzuerhalten;
eine Rückwand (40) gegenüber der Dichtungsfläche (38), wobei die Rückwand (40) zumindest teilweise den Kühlluftstromkanal (42) zum Hindurchströmen des Kühlluftstroms (44) definiert, um eine Temperatur der äußeren Laufschaufelluftdichtung (32) über Wärmeenergieaustausch zwischen der äußeren Laufschaufelluftdichtung (32) und dem Kühlluftstrom (44) zu verringern; und
die Vielzahl von Turbulatoren (46), die an der Rückwand (40) der äußeren Laufschaufelluftdichtung (32) angeordnet ist.

8. Gasturbinentriebwerk (10), umfassend:
eine Brennkammer (18); und
eine Vielzahl von Gasturbinentriebwerkskomponenten nach einem der Ansprüche 1 bis 6, die in Fluidkommunikation mit der Brennkammer (18) angeordnet ist.

## Revendications

1. Composant d'un moteur de turbine à gaz, comprenant :
un corps définissant un passage d'écoulement d'air de refroidissement (42) au niveau de celui-ci configuré pour diriger un écoulement d'air de refroidissement (44) à travers celui-ci ; et
une pluralité de turbulateurs (46) disposés au niveau d'au moins une paroi de passage (38, 40) du canal d'écoulement d'air de refroidissement (42), chaque turbulateur (46) de la pluralité de turbulateurs (46) comportant une pluralité de facettes (50) s'étendant vers l'extérieur à partir d'une partie centrale (54) ;
**caractérisé en ce que** chaque turbulateur (46) est symétrique autour d'un axe central de turbulateur (48) et est formé par une paroi ayant une surface extérieure et une surface intérieure qui est espacée de l'axe central de turbulateur (48), dans lequel la pluralité de facettes (50) sont formées sur la surface extérieure et sont régulièrement espacées autour de l'axe central du turbulateur (48), et dans lequel des facettes adjacentes (50) de la pluralité de facettes (50) sont agencées de sorte qu'une partie évidée est disposée entre elles.

2. Composant d'un moteur de turbine à gaz selon la revendication 1, dans lequel la pluralité de facettes (50) se situent dans la plage comprise entre 4 facettes (50) et 24 facettes (50) régulièrement espacées autour de l'axe central (48) .

3. Composant d'un moteur de turbine à gaz selon une quelconque revendication précédente, dans lequel chaque facette (50) de la pluralité de facettes (50) est de forme triangulaire.

4. Composant d'un moteur de turbine à gaz selon une quelconque revendication précédente, dans lequel la pluralité de facettes (50) sont configurées et agencées pour augmenter une zone de surface du turbulateur (46) sur le trajet d'un écoulement d'air de refroidissement venant en sens inverse (44).

5. Moteur de turbine à gaz selon une quelconque revendication précédente, dans lequel la pluralité de turbulateurs (46) sont configurés et agencés pour présenter des capacités d'induction de turbulence sensiblement égales quelle que soit la direction d'écoulement de l'écoulement d'air de refroidissement (44).

6. Composant d'un moteur de turbine à gaz selon une quelconque revendication précédente, dans lequel le composant est l'un d'une pale de turbine (26), d'une aube de turbine (22) ou d'un joint étanche à l'air extérieur de pale (32).

7. Composant d'un moteur de turbine à gaz selon la revendication 6, dans lequel le composant est un joint étanche à l'air extérieur de pale (32), comprenant :
une surface d'étanchéité (38) configurée pour maintenir un jeu entre le joint étanche à l'air extérieur de pale (32) et une pale de turbine adjacente (26) ;
une paroi arrière (40) opposée à la surface d'étanchéité (38), la paroi arrière (40) définissant au moins partiellement ledit passage d'écoulement d'air de refroidissement (42) pour y faire s'écouler ledit écoulement d'air de refroidissement (44) afin de réduire une température du joint étanche à l'air extérieur de pale (32) par échange d'énergie thermique entre le joint étanche à l'air extérieur de pale (32) et l'écoulement d'air de refroidissement (44) ; et
ladite pluralité de turbulateurs (46) disposés sur la paroi arrière (40) du joint étanche à l'air extérieur de pale (32).

8. Moteur de turbine à gaz (10), comprenant :
une chambre de combustion (18) ; et
une pluralité de composants d'un moteur de turbine à gaz selon l'une quelconque des revendications 1 à 6 disposés en communication fluidique avec la chambre de combustion (18).
